# EUROPÄISCHE PATENTSCHRIFT

(11) **EP 1 080 863 B1**
(45) Veröffentlichungstag und Bekanntmachung des Hinweises auf die Patenterteilung: **16.10.2002**
(21) Anmeldenummer: 00250278.9
(22) Anmeldetag: 16.08.2000
(51) Int. Cl.: B29C 47/08, B29C 47/50, B29C 47/52

(54) **Extruderanlage mit Schneckenextruder und Zahnradextruder**
Extruder installation with screw extruder and gear pump extruder
Installation d'extrusion avec une extrudeuse à vis et une extrudeuse à pompe à engrenages

(30) Priorität: 03.09.1999 DE 19943738
(43) Veröffentlichungstag der Anmeldung: 07.03.2001
(73) Patentinhaber: Berstorff GmbH, 30625 Hannover (DE)
(72) Erfinder: Capelle, Gerd, Dipl.-Ing., 30855 Langenhagen (DE)
(74) Vertreter: Meissner, Peter E., Dipl.-Ing.

(56) Entgegenhaltungen:
- EP-A- 0 508 285
- US-A- 4 619 799
- US-A- 4 642 040
- "KAUTSCHUK VERARBEITEN MIT EXTRUDER + ZAHNRADPUMPE" PLASTVERARBEITER,DE,ZECHNER UND HUETHIG VERLAG GMBH. SPEYER/RHEIN, Bd. 44, Nr. 1, 1993, Seiten 44-45, XP000362068 ISSN: 0032-1338

## Beschreibung

Die Erfindung betrifft eine Extruderanlage zur Verarbeitung von Kautschukmischungen oder thermoplastischen Kunststoffen, die eine Fütterzone, eine Plastifizierzone und eine Druckaufbauzone umfaßt. Diese Extruderanlage ist mit einem Schneckenextruder und einem in Extrudierrichtung stromabwärts daran angeschlossenen Zahnradextruder ausgestattet, an den ein Extrudierwerkzeug zur Formung des Extrudats anschließbar ist.

Kautschukmischungen zur Herstellung von Gummiprodukten oder thermoplastische Kunststoffe werden überwiegend mittels Schneckenextrudern verarbeitet Es kommen dabei 1- oder 2- Schneckenextruder zum Einsatz. Solche Extruder bestehen üblicherweise aus drei hintereinander angeordneten Zonen, nämlich aus einer Fütterzone für die Materialzufuhr, einer daran angeschlossenen Plastifizierzone, in der das zugeführte Material unter Einwirkung von Druck und Wärme in den plastischen Zustand überführt wird und aus einer Druckaufbauzone, die den erforderlichen Druck für die Förderung des plastifizierten Materials durch das jeweils für die Formgebung des Produktes benutzte Extrudierwerkzeug aufbringt.

Erfahrungsgemäß ist ein Schneckenaggregat ein vergleichsweise ungünstiges Mittel zur Erzeugung hoher statischer Drücke, da es einen relativ niedrigen Pumpenwirkungsgrad besitzt. Das bedeutet, daß die in der Druckaufbauzone zugeführte Antriebsenergie überwiegend in Wärme umgesetzt wird und daher häufig zur Vermeidung von Produktschädigungen infolge Überhitzung mittels Kühleinrichtungen abgeführt werden muß. Dies ist im Hinblick auf den Anlagenaufwand und auch den Betriebsaufwand unerwünscht.

Gegenüber einem Schneckenaggregat besitzt eine Zahnradpumpe einen etwa dreifach besseren Pumpenwirkungsgrad für den statischen Druckaufbau. Es sind entsprechende Extruderanlagen bekannt (z.B. DE 41 11 217 C1), die die guten Eigenschaften des Schneckenextruders als Plastifiziereinrichtung und die besondere Eignung der Zahnradpumpe zur Erzeugung hoher statischer Drücke miteinander verbinden. Bei solchen Anlagen wird der Ausgang des Schneckenextruders unmittefbar mit dem Eingang einer Zahnradpumpe verbunden, so daß mit hohem Wirkungsgrad hohe Extrusionsdrücke erzeugbar sind. Dabei ergibt sich der besondere Vorteil, daß das bei einem Schneckenextruder vielfach feststellbare und für die Produktqualität ungünstige Schwanken des Extrusionsdrucks (Pulsation) weitestgehend ausgeglichen wird. Nachteilig ist jedoch der hohe Anlagenaufwand für einen Schneckenextruder und eine Zahnradpumpe.

Es ist auch bekannt, eine Zahnradpumpe selbst als Aggregat zum Plastifizieren insbesondere von Kautschukmischungen zu verwenden, also auf einen Schneckenextruder gänzlich zu verzichten. Solche Pumpenaggregate werden daher auch als Zahnradextruder bezeichnet. Dabei ist es wichtig, daß die Zahnlücken im Bereich der Förderzone des Zahnradextruders stets möglichst vollständig mit dem zu verarbeitenden Material gefüllt werden, damit Lufteinschlüsse im Extrudat vermieden werden. Das Rohmaterial muß daher mit einem gewissen Vordruck in gleichmäßiger Form in den Zwickelbereich der Zahnräder auf der Eintrittsseite des Zahnradextruders gefördert werden. Hierzu ist beispielsweise aus der DE 196 52 924 A1 der Einsatz sogenannter Fütterwalzen bekannt, die jeweils aus einem Paar gegensinnig laufender Walzen bestehen, in deren Walzenspalt das Rohmaterial in Form von Materialstreifen eingeführt wird, so daß es von den Walzen erfaßt und unter Vordruck in den Zahnradextruder eingespeist wird.

Der Betrieb derartiger Fütterwalzen ist jedoch außerordentlich problematisch. Er erfordert nämlich ein sehr hohes Maß an Gleichförmigkeit hinsichtlich der Rohmaterialzuführung in der Form von Fütterstreifen. Diese Fütterstreifen müssen in Längsrichtung einen gleichbleibenden Querschnitt besitzen, also eine konstante Dicke und Breite, damit es bei konstanter Drehzahl der Fütterwalzen weder zu zeitweiligen "Überfütterungen" noch zu "Unterfütterungen" kommt. Unterfütterungen ziehen unerwünschte Lufteinschlüsse nach sich, während Überfütterungen Betriebsstörungen an den Fütterwalzen hervorrufen, da der Materialüberschuß zum Umwickeln und Verschmieren der Walzen mit Rohmaterial und zum Abreißen des Fütterstreifens führt. Die Fütterwalzen müssen daher im besonderer Weise während des Betriebs überwacht werden, so daß hierfür ein unerwünscht hoher Personalaufwand anfällt.

Aufgabe der Erfindung ist es, eine Extruderanlage vorzuschlagen, die die genannten Nachteile vermeidet, also bei geringem Betriebs- und Bauaufwand einen besonders zuverlässigen Betrieb mit möglichst gleichförmigem Extrusionsdruck ermöglicht.

Gelöst wird diese Aufgabe erfindungsgemäß durch eine Extruderanlage mit den Merkmalen des Patentanspruchs 1. Vorteilhafte Weiterbildungen der Erfindung ergeben sich aus den Unteransprüchen.

Das Wesen der vorliegenden Erfindung ist darin zu sehen, daß eine Hintereinanderschaltung eines Schneckenextruders und eines Zahnradextruders vorgesehen wird, daß dabei aber die Plastifizierung des Materials und die Erzeugung des statischen Drucks vom Zahnradextruder vorgenommen wird, während die Aufgabe der Materialzuführung durch den Schneckenextruder erfüllt wird. Der Schneckenextruder beschränkt sich dabei in seiner Baulänge lediglich auf die Fütterzone eines üblichen Schneckenextruders, besitzt selbst also keine Plastifizierzone. Ein solcher Extruder, der im folgenden als Kurzextruder bezeichnet wird, erfordert nur einen geringen Bauaufwand, da er weder mit einer Heizung, noch mit einer Kühlung ausgestattet ist.

Ein besonders großer Vorteil dieser Lösung ist drin zu sehen, daß der Kurzextruder ein sehr robustes Materialeinzugsaggregat ist, das mit beliebigen körperlichen Ausbildungsformen des zuzuführenden Rohmaterials beschickt werden kann. Es können also nicht nur streifenförmige Materialien, auf deren Gleichförmigkeit es überhaupt nicht mehr ankommt, verwendet werden, sondern auch Granulate und auch sogenannte Puppen ( aus streifenförmigem Material erzeugte Wickel von z.B. 100 mm Durchmesser). Eine solche Extruderanlage läßt sich vorzugsweise für die Verarbeitung von hochviskosen Materialien, also insbesondere von Kautschukmischungen, aber auch von thermoplastischen Kunststoffen einsetzten. Die Steuerung und Regelung der Anlage sind außerordentlich einfach.

Eine Möglichkeit zur weiteren Reduzierung des Anlagenaufwands besteht darin, den Kurzextruder und den Zahnradextruder von einem gemeinsamen Motor antreiben zu lassen. Grundsätzlich kann dieser Motor beliebiger Natur sein, bevorzugt ist er als Elektromotor ausgebildet. Diese Vereinfachung des Antriebs ist ohne weiteres möglich, weil sich überraschender Weise gezeigt hat, daß bei den meisten Materialien das Verhältnis der erforderlichen Drehzahlen der beiden Extruder zueinander über einen weiten Drehzahlbereich hinweg praktisch konstant bleibt. Nur bei relativ wenigen Materialsorten ist eine Anpassung der Drehzahlen an Optimalwerte notwendig, bei denen das Drehzahlverhältnis sich ändert. Der Variationsbereich liegt dabei erfahrungsgemäß etwa im Bereich von 1:1 bis 1:0,9.

Zweckmäßigerweise sind sowohl der Zahnradextruder als auch der Kurzextruder mit separaten Getrieben für ihren Antrieb ausgestattet, wobei eines der beiden Getriebe, das über eine Kupplung mit dem gemeinsamen Antriebsmotor verbunden ist, über eine zweite Abtriebswelle verfügt, die zur Leistungsübertragung antriebstechnisch mit der Antriebswelle des anderen Getriebes gekoppelt ist. Vorzugsweise ist das Getriebe des Schneckenextruders über eine Kupplung direkt mit dem Antriebsmotor verbunden. Die antriebstechnische Kopplung der beiden Getriebe untereinander kann beispielsweise über einen Zahnriementrieb erfolgen, der einem einfachen Keilriementrieb mit glatten Flächen wegen der Vermeidung von Schlupf vorzuziehen ist. Eine Veränderung des Drehzahlverhältnisses läßt sich im Bedarfsfall bei einem solchen Zahnriementrieb ohne großen Aufwand durch einfachen Austausch der Zahnriemenscheiben gegen Zahnriemenscheiben mit entsprechend geändertem Durchmesser erreichen. Die antriebstechnische Kopplung könnte bei fehlender Notwenigkeit zu einer differenzierten Drehzahleinstellung an den beiden Extrudern auch beispielsweise über eine Kardanwelle erfolgen. In Sonderfällen, in denen im Betrieb häufiger zwischen Materialien gewechselt werden muß, die hinsichtlich des Dehzahlverhältnisses kritisch sind, also Anpassungen des Drehzahlverhältnisses erfordern, wird vorzugsweise ein Zwischengetriebe mit stufenlos veränderbarem Übersetzungsverhältnis (PIV-Getriebe) zur antriebstechnischen Kopplung der beiden Getriebe eingesetzt.

Die beiden Getriebe sind zweckmäßig hinsichtlich der Übersetzung als Stirnradgetriebe ausgebildet. Das Getriebe, das mit zwei Abtriebswellen versehen ist, weist vorzugsweise an seiner Antriebswelle eine Kegelradgetriebestufe zur Leistungsverzweigung auf die zweite Abtriebswelle auf.

Der Kurzextruder ist zur Einführung des Rohmaterials zweckmäßigerweise mit einem Füttertrichter versehen, so daß Materialien unterschiedlichster körperlicher Konsistenz verarbeitbar sind. Wenn das Rohmaterial nicht als Granulat, sondern als Fütterstreifen oder in Puppenform vorliegt, kann es zweckmäßig sein, den Füttertrichter zur Unterstützung des Materialeinzugs in den Füttertrichter mit einfachen Fütterwalzen zu bestücken, die bei Bedarf motorisch angetrieben sein können.

Der Kurzextruder ist vorzugsweise als 2-Schneckenextruder ausgebildet und eignet sich damit sowohl zur Verarbeitung von Kautschuk als auch von Kunststoff. Als 1-Schneckenextruder ist er primär für die Kautschukverarbeitung geeignet.

Im Hinblick auf den Zahnradextruder können unterschiedliche Typen von Zahnrädern eingesetzt werden, also beispielsweise Zahnräder mit Gerad- oder Schrägverzahnung. Besonders bevorzugt werden jedoch Zahnräder mit Pfeilverzahnung, da diese sich durch einen besonders guten Gleichlauf und durch Kompensation von Axialkräften bei der Drehmomentübertragung auszeichnen.

Zur Temperierung des Zahnradextruders sind Heizgeräte vorgesehen, die vorzugsweise containerartig ausgeführt und redundant angeordnet sind, so daß im Störungsfall ein schnelles Umschalten und ein problemloser Austausch ohne wesentliche Betriebsunterbrechung möglich sind. Zweckmäßigerweise werden der Zahnradextruder und der Kurzextruder mit den beiden Getrieben auf einem tischartigen Maschinengestell aufgebaut, unter dem die Heizgeräte platzsparend aufgestellt werden können.

Die gesamte Extruderanlage wird vorzugsweise hinsichtlich des Antriebs und der Heizung von einer elektronischen Steuerung geführt.

Nachfolgend wird die Erfindung anhand des in der Zeichnung dargestellten Ausführungsbeispiels näher erläutert. Es zeigen:
- Fig. 1: eine Seitenansicht einer erfindungsgemäßen Extruderanlage,
- Fig. 2: eine Draufsicht auf die Extruderanlage in Figur 1 und
- Fig. 3: eine Frontansicht der Extruderanlage in Figur 1.

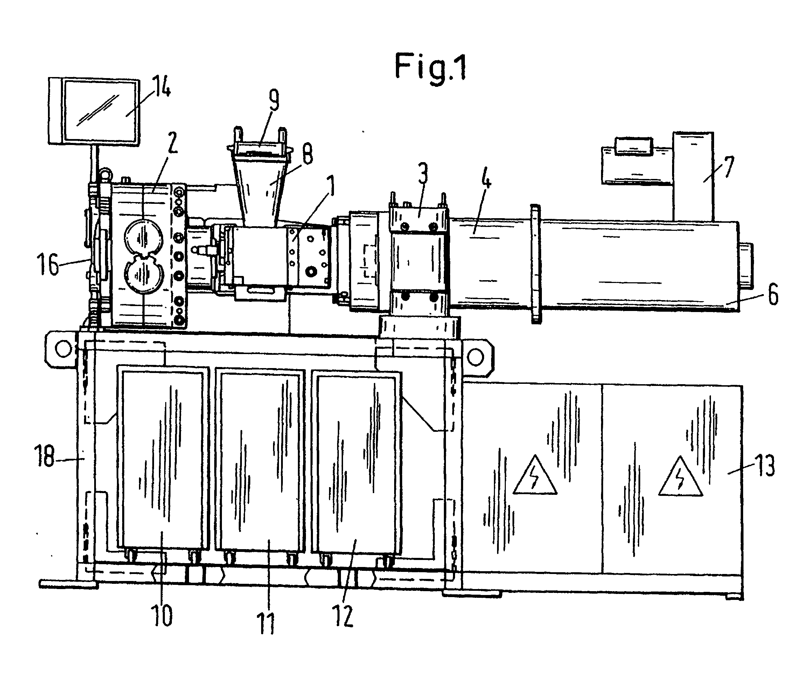

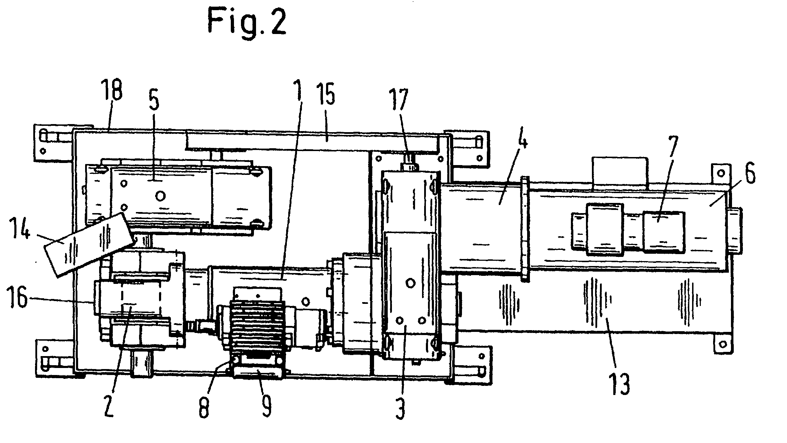

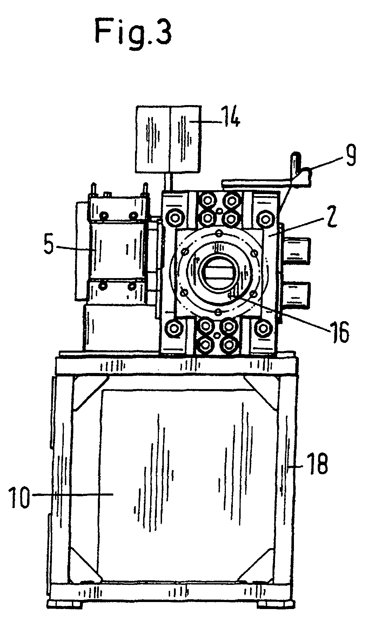

Die in den Figuren 1 bis 3 in unterschiedlichen Ansichten dargestellte Extruderanlage weist als wesentliche Aggregate für die Verarbeitung von Kautschuk oder thermoplastischen Kunststoffen einen als Kurzextruder 1 ausgebildeten Schneckenextruder und einen in Materialflußrichtung unmittelbar daran angeschlossenen Zahnradextruder 2 auf. Der Kurzextruder 1 umfaßt lediglich die Einzugszone eines üblichen Schneckenextruders und weist selbst keinen Verfahrensteil auf, ist also ohne Heizung und Kühlung. Zur Beschickung mit dem zu verarbeitenden Material ist er mit einem Füttertrichter 8 ausgestattet. Dieser ist, um insbesondere den Einzug von Fütterstreifen (oder Puppen) zu unterstützen, mit angetriebenen Fütterwalzen 9 ausgerüstet, die bei Verwendung von Granulat als Rohmaterial nicht vorgesehen werden. Der Kurzextruder 1 ist mit einem Getriebe 3 verbunden, welches seinerseits über eine Kupplung 4 von einem elektrischen Motor 6 antreibbar ist. Der Motor 6 wird von einem Lüfter 7 mit Kühlluft beaufschlagt. Das Getriebe 3 ist mit zwei Abtriebswellen ausgestattet, von denen die eine (nicht dargestellt) den Kurzextruder 1 antreibt, während die andere Abtriebswelle 17 mit einer Zahnriemenscheibe eines Zahnriementriebs 15 bestückt ist. Der Zahnradextruder 2 wird von einem Getriebe 5 angetrieben, das seinerseits über den Zahnriementrieb 15 in Antriebsverbindung mit dem Getriebe 3 und über dieses mit dem Motor 6 steht. Der Zahnradextuder 2 weist auf seiner Druckseite einen Anschluß 16 für die Anbringung eines nicht dargestellten Extrusionswerkzeugs auf. Zur Temperierung des Zanradextruders 2 sind in redundanter Ausführung containerartige Heizgeräte 10, 11, 12 vorgesehen, die auf Rollen aufgestellt und daher im Störungsfall leicht austauschbar sind. Da der Zahnradextruder 2, der Kurzextruder 1, das Getriebe 5 sowie das Getriebe 3 mit dem über die Kupplung 4 angeflanschten Motor 6 auf einem tischartigen Maschinengestell 18 aufgebaut sind, sind die Heizgeräte 10, 11, 12 in platzsparender Weise unter der Tischfläche dieses Maschinengestells 18, also unter den beiden Extrudern angeordnet. In ebenfalls platzsparender Weise ist ein Schaltschrank 13, in dem sich die Elektrik für den Antrieb und die Steuerelektronik der gesamten Anlage befindet, in unmittelbarem Anschluß an das Maschinengestell 18 unter dem Motor 6 angeordnet. Ein Bildschirm der elektronischen Steuerung, mit dem das Bedienungspersonal die gesamte Anlage einrichten und überwachen kann, ist mit dem Bezugszeichen 14 bezeichnet.

Beim Betrieb der Anlage wird das Rohmaterial beispielsweise in Form von Fütterstreifen über den Füttertrichter 8 unter Mitwirkung der Fütterwalzen 9 als Einzugshilfe in den Kurzextruder 1 gefördert. Das zugeführte Material wird von dem Schneckenaggregat des beispielsweise als 2-Schneckenextruder ausgebildeten Kurzextruders 1 erfaßt und in gleichmäßigem Förderstrom unter Aufbau eines konstanten Vordrucks in den Einzugsbereich des Zahnradextruders 2 gefördert. Infolge dieses Vordrucks füllen sich die Zahnlücken des Zahnradextruders in optimaler Weise ohne unerwünschte Lufteinschlüsse mit dem Rohmaterial. Das Rohmaterial wird unter Einwirkung von Druck und Temperatur, die durch von außen zugeführte Wärme und durch die im Zahnradextruder 2 entstehende Friktionswärme auf das erforderliche Niveau gebracht wird, in der gewünschten Weise plastifiziert und dann mit dem notwendigen statischen Druck dem Extrusionswerkzeug zugeführt. Der Zahnradextruder 2 übernimmt also nicht nur die Aufgabe der Druckerhöhung des plastifizierten Materials sondern auch die Aufgabe des Plastifizierens selbst. Die Drehzahlen des Zahnradextruders 2 und des Kurzextruders 1 stehen in einem konstanten Verhältnis. Die Produktionsleistung der Anlage kann über die Regelung der Antriebsdrehzahl des Motors 6 beeinflußt werden. Soweit bei der Verarbeitung drehzahlkritischer Materialien eine Anpassung des Drehzahlverhältnisses von Zahnradextruder 2 und Kurzextruder 1 notwendig oder zweckmäßig ist, kann dies durch Austausch von Zahnriemenscheiben mit entsprechend geändertem Durchmesser ohne großen Aufwand gewährleistet werden. Schwankungen in der Materialzufuhr zum Füttertrichter 8 werden durch den Kurzextruder 1 in der Regel problemlos ausgeglichen, so daß eine äußerst hohe Betriebssichheit für die Gesamtanlage gewährleistet ist.

Die erfindungsgemäße Extruderanlage weist nicht nur im Hinblick auf die verarbeitbare Rohmaterialform universelle Einsatzmöglichkeiten (Granulat, Streifen, Puppen) auf, sondern besitzt auch bezüglich des Verarbeitungsprozesses selbst eine universelle Eignung. Die Anlage kann als Strainermaschine, als Vorwärmaggregat oder im beschriebenen Sinn als Extrusionsmaschine betrieben werden.

### Bezugszeichenliste:

- 1: Kurzextruder
- 2: Zahnradextruder
- 3: Getriebe
- 4: Kupplung
- 5: Getriebe
- 6: Motor
- 7: Lüfter
- 8: Füttertrichter
- 9: Fütterwalzen
- 10: Heizgerät
- 11: Heizgerät
- 12: Heizgerät
- 13: Schaltschrank
- 14: Bildschirm
- 15: Zahnriementrieb
- 16: Anschluß für Extrudierwerkzeug
- 17: Abtriebswelle
- 18: tischartiges Maschinengestell

## Patentansprüche

1. Extruderanlage zur Verarbeitung von Kautschukmischungen oder thermoplastischen Kunststoffen, die eine Fütterzone, eine Plastifizierzone und eine Druckaufbauzone umfaßt, mit einem Schneckenextruder und einem in Extrudierrichtung stromabwärts daran angeschlossenen Zahnradextruder (2), an den ein Extrudierwerkzeug anschließbar ist,
**dadurch gekennzeichnet,**
**daß** der Schneckenextruder ein in seiner Baulänge verkürzter Extruder (Kurzextruder 1) ist, der lediglich eine Fütterzone umfaßt, und daß der Zahnradextruder (2) die Plastifizier- und Druckaufbauzone bildet.

2. Extruderanlage nach Anspruch 1,
**dadurch gekennzeichnet,**
**daß** der Kurzextruder (1) und der Zahnradextruder (2) jeweils mit einem Getriebe (3, 5) ausgestattet sind.

3. Extruderanlage nach Anspruch 2,
**dadurch gekennzeichnet,**
**daß** der Kurzextruder (1) und der Zahnradextruder (2) durch einen gemeinsamen Motor (6) antreibbar sind.

4. Extruderanlage nach Anspruch 3,
**dadurch gekennzeichnet,**
**daß** eines der beiden Getriebe (3, 5) über eine Kupplung (4) mit dem Motor (6) verbunden ist und zwei Abtriebswellen aufweist, von denen die eine den zugeordneten Extruder (Kurzextruder 1 bzw. Zahnradextruder 2) antreibt und die andere (17) antriebstechnisch mit dem jeweils anderen Getriebe der beiden Extruder gekoppelt ist.

5. Extruderanlage nach Anspruch 4,
**dadurch gekennzeichnet,**
**daß** zur antriebstechnischen Kopplung des Getriebes (5) des Zahnradextruders (2) mit dem Getriebe (3) des Kurzextruders (1) ein Zahnriementrieb (15) oder eine Kardanwelle vorgesehen ist.

6. Extruderanlage nach Anspruch 4,
**dadurch gekennzeichnet,**
**daß** zur antriebstechnischen Kupplung des Getriebes (5) des Zahnradextruders (2) mit dem Getriebe (3) des Kurzextruders (1) ein Getriebe mit variabler Übersetzung (PIV-Getriebe) vorgesehen ist).

7. Extruderanlage nach einem der Ansprüche 1 bis 6,
**dadurch gekennzeichnet,**
**daß** der Kurzextruder (1) einen Füttertrichter (8) aufweist, der mit frei laufenden oder angetriebenen Fütterwalzen (9) als Einzugshilfe ausgestattet ist.

8. Extruderanlage nach einem der Ansprüche 3 bis 7,
**dadurch gekennzeichnet,**
**daß** der Motor (6) ein Elektromotor ist.

9. Extruderanlage nach einem der Ansprüche 1 bis 8,
**dadurch gekennzeichnet,**
**daß** der Kurzextruder (1) ein 2-Schneckenextruder ist.

10. Extruderanlage nach einem der Ansprüche 1 bis 9,
**dadurch gekennzeichnet,**
**daß** zur Temperierung des Zahnradextruders (2) in redundanter Ausführung austauschbare containerartige Heizgeräte (10, 11, 12) vorgesehen sind.

11. Extruderanlage nach Anspruch 10,
**dadurch gekennzeichnet,**
**daß** der Zahnradextruder (2), der Kurzextruder (1) und die beiden Getriebe (3, 5) auf einem tischartigen Maschinengestell aufgebaut sind, unter dessen Tischfläche die Heizgeräte (10,11, 12) angeordnet sind.

12. Extruderanlage nach einem der Ansprüche 1 bis 11,
**dadurch gekennzeichnet,**
**daß** eine elektronische Steuerung zur Führung des Antriebs und der Temperierung der Extruderanlage vorgesehen ist.

## Claims

1. Extruder installation for processing rubber mixtures or thermoplastic plastic materials, which comprises a feed zone, a melting zone and a pressure build-up zone, having a screw extruder and a geared extruder (2) which is connected thereto downstream in the extrusion direction and to which geared extruder an extrusion tool can be connected,
**characterised in that**
the screw extruder is an extruder (short extruder 1) which is shortened in its structural length, said extruder comprising merely a feed zone, and **in that** the geared extruder (2) forms the melting- and pressure build-up zone.

2. Extruder installation according to claim 1,
**characterised in that**
the short extruder (1) and the geared extruder (2) are provided respectively with a transmission (3, 5).

3. Extruder installation according to claim 2,
**characterised in that**
the short extruder (1) and the geared extruder (2) are actuatable by means of a common motor (6).

4. Extruder installation according to claim 3,
**characterised in that**
one of the two transmissions (3, 5) is connected to the motor (6) via a coupling (4) and has two driven shafts, one of which actuates the assigned extruder (short extruder 1 or geared extruder 2) and the other (17) of which is coupled for motive power purposes to the other transmission respectively of the two extruders.

5. Extruder installation according to claim 4,
**characterised in that**,
for the purpose of motive power coupling of the transmission (5) of the geared extruder (2) to the transmission (3) of the short extruder (1), a synchronous belt drive (15) or a cardan shaft is provided.

6. Extruder installation according to claim 4,
**characterised in that**,
for the purpose of motive power coupling of the transmission (5) of the geared extruder (2) to the transmission (3) of the short extruder (1), a transmission with variable transmission (PIV-transmission) is provided.

7. Extruder installation according to one of the claims 1 to 6,
**characterised in that**
the short extruder (1) has a feed funnel (8) which is provided with free-running or actuated feed rollers (9) as feed aid.

8. Extruder installation according to one of the claims 3 to 7,
**characterised in that**
the motor (6) is an electric motor.

9. Extruder installation according to one of the claims 1 to 8,
**characterised in that**
the short extruder (1) is a twin screw extruder.

10. Extruder installation according to one of the claims 1 to 9,
**characterised in that**
exchangeable container-like heating devices (10, 11, 12) are provided for temperature control of the geared extruder (2) in a redundant configuration.

11. Extruder installation according to claim 10,
**characterised in that**
the geared extruder (2), the short extruder (1) and the two transmissions (3, 5) are constructed on a table-like machine frame, under the table surface of which the heating devices (10, 11, 12) are disposed.

12. Extruder installation according to one of the claims 1 to 11,
**characterised in that**
an electronic control is provided for guiding the drive and for temperature control of the extruder installation.

## Revendications

1. Installation d'extrusion pour le traitement de mélanges de caoutchouc ou de matières synthétiques thermoplastiques, qui comporte une zone d'alimentation, une zone de plastification et une zone de montée en pression, possédant une extrudeuse à vis et une extrudeuse à engrenages (2) raccordée à celle-ci en aval dans le sens d'extrusion, à laquelle un outil d'extrusion peut être raccordé,
**caractérisée en ce que** l'extrudeuse à vis est une extrudeuse raccourcie dans sa longueur de construction (extrudeuse courte 1), qui comporte uniquement une zone d'alimentation, et **en ce que** l'extrudeuse à engrenages (2) forme les zones de plastification et de montée en pression.

2. Installation d'extrusion selon la revendication 1,
**caractérisée en ce que** l'extrudeuse courte (1) et l'extrudeuse à engrenages (2) sont chacune équipées d'une transmission (3, 5).

3. Installation d'extrusion selon la revendication 2,
**caractérisée en ce que** l'extrudeuse courte (1) et l'extrudeuse à engrenages (2) peuvent être entraînées par un moteur (6) commun.

4. Installation d'extrusion selon la revendication 3,
**caractérisée en ce que** l'une des deux transmissions (3, 5) est reliée au moteur (6) par l'intermédiaire d'un accouplement (4) et présente deux arbres de sortie, dont l'un entraîne l'extrudeuse qui lui est associée (extrudeuse courte 1 ou extrudeuse à engrenages 2) et l'autre (17) est couplé en entraînement avec l'autre transmission des deux extrudeuses.

5. Installation d'extrusion selon la revendication 4,
**caractérisée en ce que**, pour l'accouplement en entraînement de la transmission (5) de l'extrudeuse à engrenages (2) avec la transmission (3) de l'extrudeuse courte (1), il est prévu une commande à courroie dentée (15) ou un arbre à cardan.

6. Installation d'extrusion selon la revendication 4,
**caractérisée en ce que**, pour l'accouplement en entraînement de la transmission (5) de l'extrudeuse à engrenages (2) avec la transmission (3) de l'extrudeuse courte (1), il est prévu une transmission à rapport variable (transmission PIV).

7. Installation d'extrusion selon l'une des revendications 1 à 6,
**caractérisée en ce que** l'extrudeuse courte (1) présente une trémie d'alimentation (8) qui est équipée de rouleaux d'alimentation (9) libres ou entraînés en tant qu'auxiliaires d'introduction.

8. Installation d'extrusion selon l'une des revendications 3 à 7,
**caractérisée en ce que** le moteur (6) est un moteur électrique.

9. Installation d'extrusion selon l'une des revendications 1 à 8,
**caractérisée en ce que** l'extrudeuse courte (1) est une extrudeuse à deux vis.

10. Installation d'extrusion selon l'une des revendications 1 à 9,
**caractérisée en ce que**, pour équilibrer la température de l'extrudeuse à engrenages (2), des dispositifs de chauffage (10, 11, 12) interchangeables en forme de conteneurs sont prévus d'une manière redondante.

11. Installation d'extrusion selon la revendication 10,
**caractérisée en ce que** l'extrudeuse à engrenages (2), l'extrudeuse courte (1) et les deux transmissions (3, 5) sont montés sur un bâti de machine en forme de table, sous la surface de table duquel sont installés les dispositifs de chauffage (10, 11, 12).

12. Installation d'extrusion selon l'une des revendications 1 à 11,
**caractérisée en ce qu'**il est prévu une commande électronique pour la commande de l'entraînement et l'équilibrage en température de l'installation d'extrusion.
